# EUROPÄISCHE PATENTSCHRIFT

(11) **EP 0 576 995 B1**
(45) Veröffentlichungstag und Bekanntmachung des Hinweises auf die Patenterteilung: **17.09.1997**
(21) Anmeldenummer: 93110054.9
(22) Anmeldetag: 24.06.1993
(51) Int. Cl.: C09B 1/32, C09B 5/34

(54) **Verfahren zur Herstellung von 5-Halogen-2-(1-anthrachinonylamino)benzoesäuren und 4'-Halogen-2,1(N)-anthrachinonyl-1',2'(N)-benzacridonen**
Process for the preparation of 5-halogeno-2-(1-anthraquinonylamino)benzoic acids and of 4'-halogeno-2,1(N)-anthraquinonyl-1',2'(N)-benzacridones
Procédé pour la préparation d'acides 5-halogéno-2-(1-anthraquinonylamino)benzoiques et de 4'-halogéno-2,1(N)-anthraquinonyl-1',2'(N)-benzacridones

(30) Priorität: 01.07.1992 DE 4221606
(43) Veröffentlichungstag der Anmeldung: 05.01.1994
(73) Patentinhaber: BASF Aktiengesellschaft, 67063 Ludwigshafen (DE)
(72) Erfinder: Schmitt, Michael, Dr., D-67549 Worms (DE); Niedenbrueck, Matthias, Dr., D-6703 Limburgerhof (DE); Patsch, Manfred, Dr., D-6706 Wachenheim (DE)

(56) Entgegenhaltungen:
- DE-C- 237 236
- DE-C- 245 875
- DE-C- 246 966
- DE-C- 572 215
- GB-A- L 894
- US-A- 1 950 348
- US-A- 3 797 995
- DATABASE WPI Week 7528, Derwent Publications Ltd., London, GB; AN 75-46730W[28] 'anthrachinondye preparation' & JP-A-49 134 738 (SUMITOMO CHEM. IND. K. K.) 25. Dezember 1974
- DATABASE WPI Week 7528, Derwent Publications Ltd., London, GB, AN 75-46730W [28]

## Beschreibung

Die vorliegende Erfindung betrifft ein neues Verfahren zur Herstellung von 5-Halogen-2-(1-anthrachinonylamino)benzoesäuren der allgemeinen Formel I 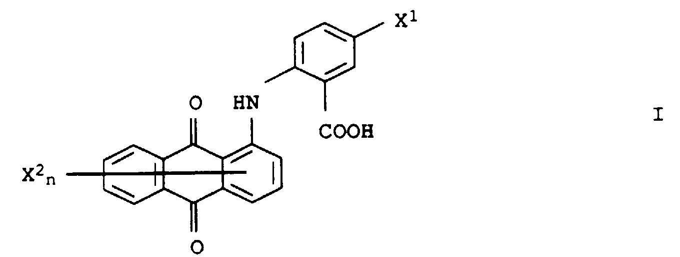 in der
- X¹: Chlor oder Brom bedeutet,
- X²: für Wasserstoff, Chlor oder Brom steht, wobei diese Reste im Fall n > 1 gleich oder verschieden sein können, und
- n: eine Zahl von 1 bis 6 bedeutet,
sowie die Herstellung von 4'-Halogen-2,1(N)-anthrachinonyl-1',2'(N)-benzacridonen der allgemeinen Formel III 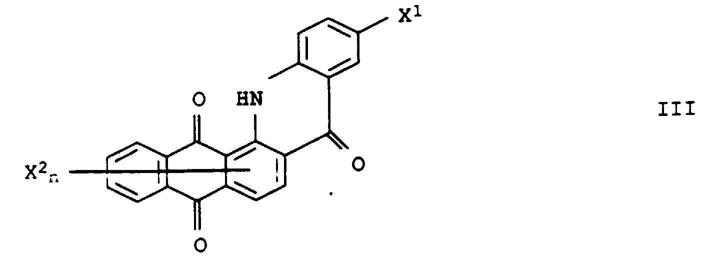 durch cyclisierende Kondensation der erfindungsgemäß erhaltenden Säuren I.

Die 5-Halogen-2-(1-anthrachinonylamino)benzoesäuren I und die 4'-Halogen-2,1(N)-anthrachinonyl-1',2'(N)-benzacridone III sind wichtige Zwischenprodukte für die Herstellung von Küpenfarbstoffen wie C.I. Vat Brown 46 (C.I. No. 70905). 4'-Brom-2,1(N)-anthrachinonyl-1',2'(N)-benzacridon selbst kann auch als Dispersionsfarbstoff zum Färben von Polyester verwendet werden.

Üblicherweise werden die in 4'-Stellung halogenierten, insbesondere bromierten Acridone III durch Bromierung der entsprechend unsubstituierten Anthrachinonylacridone in Nitrobenzol hergestellt (z.B. DRP 253 090), die ihrerseits aus 2-(1-Anthrachinonylamino)benzoesäuren durch cyclisierende Kondensation mit einem Säurehalogenid wie Benzoylchlorid als Kondensationsmittel in einem inerten Lösungsmittel wie Nitrobenzol erhältlich sind. Diese Herstellungsmethode hat jedoch den großen Nachteil, daß in der Regel keine selektive Monobromierung möglich ist, da die eingesetzten Anthrachinonylacridone nur schwer löslich sind und daher in der Hitze bromiert werden muß. Außerdem führt das als Reaktionsmedium verwendete Nitrobenzol zu einer zusätzlichen Abwasserbelastung.

Weiterhin ist es aus dem DRP 237 236 bekannt, die Acridone III durch Umsetzung von 1-Chloranthrachinon-2-carbonsäure beispielsweise mit p-Bromanilin und anschließende cyclisierende Kondensation der gebildeten 1-(4'-Bromphenylamino)-anthrachinon-2-carbonsäuren herzustellen. Die als Ausgangsprodukt eingesetzte Anthrachinoncarbonsäure ist jedoch nur auf aufwendige Weise in der erforderlichen Reinheit zu erhalten, da bei ihrer Herstellung in der Regel auch mehrfach chlorierte Produkte anfallen.

Die Herstellung von bromierten Anthrachinonylbenzacridonen durch Kondensation von im Benzoesäurerest bromierten chinonylaminobenzoesäuren ist schließlich aus dem DRP 246 966 bekannt. Jedoch wird hier durch Umsetzung von 1-Chloranthrachinon mit 3,5-Dibromanthranilsäuremethylester nur das 2',4'-dibromierte Acridon erhalten. Ein selektiv monobromiertes Produkt ist hier nur schwer zugänglich, da die Herstellung der entsprechenden monobromierten Anthranilsäure problematisch ist.

Der Erfindung lag daher die Aufgabe zugrunde, 4'-Halogen-2,1(N)-anthrachinonyl-1',2'(N)-benzacridone III in guten Ausbeuten und hohen Reinheiten in verfahrenstechnisch einfacher und wirtschaftlicher Weise zugänglich zu machen.

Demgemäß wurde zunächst ein Verfahren zur Herstellung von 5-Halogen-2-(1-anthrachinonylamino)benzoesäuren der allgemeinen Formel I 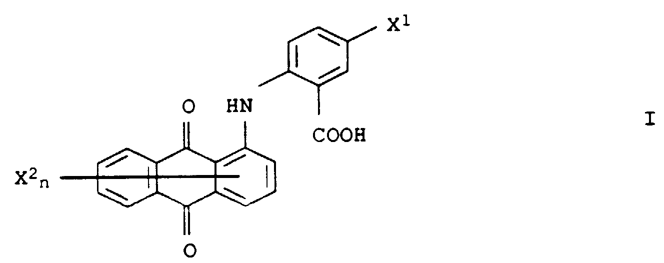 in der
- X¹: Chlor oder Brom bedeutet,
- X²: für Wasserstoff, Chlor oder Brom steht, wobei diese Reste im Fall n > 1 gleich oder verschieden sein können, und
- n: eine Zahl von 1 bis 6 bedeutet,
gefunden, welches dadurch gekennzeichnet ist, daß man 2-(1-Anthrachinonylamino)benzoesäuren der allgemeinen Formel II 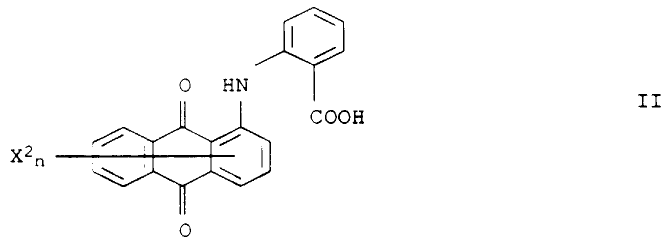 in Gegenwart von Schwefelsäure mit dem Halogen umsetzt.

Außerdem wurde ein Verfahren zur Herstellung von 4'-Halogen-2,1(N)-anthrachinonyl-1',2'(N)-benzacridonen der allgemeinen Formel III 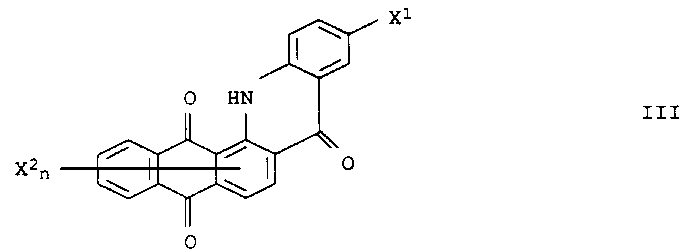 gefunden, welches dadurch gekennzeichnet ist, daß man zunächst die 2-(1-Anthrachinonylamino)benzoesäuren II in Gegenwart von Schwefelsäure mit Halogen zu den 5-Halogen-2(1-anthrachinonylamino)benzoesäuren I umsetzt und die Säuren I dann nach Entfernung von eventuell vorhandenem, überschüssigem Halogen und gebildetem Halogenwasserstoff sowie Temperaturerhöhung in Gegenwart der Schwefelsäure cyclisierend kondensiert.

Die erfindungsgemäße Herstellung der 5-Halogen-2-(1-anthrachinonylamino)benzoesäuren I durch Halogenierung der entsprechend unsubstituierten Säuren II in Schwefelsäure kann unter den für derartige Umsetzungen üblichen Bedingungen durchgeführt werden.

So reicht die bei der Herstellung der bevorzugten, in 5-Stellung bromierten Säuren I eingesetzte Brommenge in der Regel vom stöchiometrisch erforderlichen Wert bis zu einem 50 %igen Überschuß, bevorzugt bis zu 15 %igem Überschuß.

Als Reaktionsmedium dient im allgemeinen eine mindestens 85 gew.-%ige Schwefelsäure bis zu einem Oleum mit 10 Gew.-% SO₃. Vorzugsweise wird 96 bis 100 gew.-%ige Schwefelsäure verwendet.

Die Menge an Schwefelsäure ist an sich nicht kritisch und beträgt üblicherweise das 10 bis 15fache der Menge an zu bromierender Säure II.

Zweckmäßigerweise löst man die Säure II zunächst in der Schwefelsäure und gibt dann langsam das Brom zu.

Die Reaktionstemperatur beträgt in der Regel 0 bis 25°C, vorzugsweise 0 bis 5°C.

Die Reaktionszeiten liegen bei etwa 2 bis 3 h.

Die Bromierung kann sowohl kontinuierlich als auch diskontinuierlich durchgeführt werden.

Das erfindungsgemäße Verfahren ermöglicht die selektive Halogenierung der 2-(1-Anthrachinonylamino)benzoesäuren II und liefert die gewünschten 5-Halogen-2-(1-anthrachinonylamino)benzoesäuren I in hohen Ausbeuten und in so guten Reinheiten, daß sie vorteilhaft ohne Isolierung direkt zu den entsprechenden Acridonen III cyclisiert werden können.

Sollen die Säuren I dennoch isoliert werden, so kann dies in üblicher Weise durch Verdünnen des Reaktionsgemisches mit Wasser und Abfiltrieren der so ausgefällten Säuren I geschehen.

Selbstverständlich kann man die erfindungsgemäße Halogenierung auch mit anderen üblichen Halogenierungsmitteln und in anderen inerten Lösungsmitteln wie Nitrobenzol und Chlorbenzol durchführen.

Die Verwendung von elementarem Halogen und Schwefelsäure ist jedoch immer vorzuziehen, da eine anschließende cyclisierende Kondensation zu den Acridonen III direkt im anfallenden Reaktionsgemisch vorgenommen werden kann. Die Schwefelsäure dient hierbei gleichzeitig als Kondensationsmittel und als Reaktionsmedium. Eventuell noch vorhandenes, überschüssiges Halogen sowie der bei der Halogenierung gebildete Halogenwasserstoff können in einfacher Weise aus dem Reaktionsgemisch entfernt werden.

Für die erfindungsgemäße cyclisierende Kondensation der 5-Halogen-2-(1-anthrachinonylamino)benzoesäuren I zu den 4'-Halogen-2,1(N)-anthrachinonyl-1',2'(N)-benzacridonen III ist in der Regel 96 gew.-%ige Schwefelsäure bis zu einem Oleum mit 10 Gew.-% SO₃ geeignet. Bevorzugt ist auch hier 96 bis 100 gew.-%ige Schwefelsäure.

Die Menge an Schwefelsäure entspricht den bei der Halogenierung eingesetzten Mengen.

Die Reaktionstemperatur beträgt im allgemeinen 50 bis 100°C, vorzugsweise 70 bis 80°C.

Die Reaktionszeiten hängen von der Konzentration der Schwefelsäure ab und betragen bei 100 gew.-%iger Schwefelsäure in der Regel 3 bis 5 h.

Zweckmäßigerweise geht man bei der erfindungsgemäßen Cyclisierung so vor, daß man nach der Halogenierung zunächst das in der Regel im Überschuß vorliegende Halogen und den gebildeten Halogenwasserstoff durch Einblasen eines nicht reagierenden Gases wie Stickstoff oder Luft aus dem Reaktionsgemisch entfernt und dieses dann auf die Reaktionstemperatur erhitzt.

Die Isolierung der Acridone III kann anschließend nach Abkühlen auf Raumtemperatur durch Fällen auf Eis, Abfiltrieren, Waschen und Trocknen erfolgen.

Auch die Cyclisierung kann sowohl kontinuierlich als auch diskontinuierlich vorgenommen werden.

Mit Hilfe der erfindungsgemäßen cyclisierenden Kondensation können die 4'-Halogen-2,1(N)-anthrachinonyl-1',2'(N)-benzacridone III in hervorragenden Ausbeuten (in der Regel 96-99 %) und guten Reinheiten (im allgemeinen > 95 %) hergestellt werden. Besonders vorteilhaft ist die gewissermaßen einstufige Herstellung - Halogenierung und Kondensation werden nacheinander in demselben Reaktionsmedium durchgeführt. Ein weiteres Kondensationsmittel muß nicht zugesetzt werden, und die eingesetzte Schwefelsäure ist zudem vorteilhaft in einer Spaltanlage regenerierbar. Das erfindungsgemäße Verfahren zeichnet sich also zusätzlich durch seine Wirtschaftlichkeit und verfahrenstechnische Einfachheit aus.

Besondere Bedeutung hat das erfindungsgemäße Verfahren für die Herstellung von 4'-Brom-4-chlor- und 4'-Brom-3-chlor-2,1(N)-anthrachinonyl-1',2'(N)-benzacridon und vor allem von 4'-Brom-2,1(N)-anthrachinonyl-1',2'(N)-benzacridon.

### Beispiele

A) Herstellung von 5-Brom-2-(1-anthrachinonylamino)benzoesäuren I
   Zu einer Lösung von 0,1 mol der Säure II in 500 g 100 gew.-%iger Schwefelsäure wurden bei 0 bis 5°C 22,5 g (0,14 mol) Brom in 90 min. zugetropft. Die erhaltene Mischung wurde noch 3 h bei 0 bis 5°C gerührt und dann auf 2 kg eines Eis/Wasser-Gemisches ausgetragen.
   Die ausgefällte Säure I wurde abfiltriert, mit Wasser gewaschen und getrocknet.
   Einzelheiten zu diesen Versuchen sowie deren Ergebnisse sind in Tabelle 1 aufgeführt. 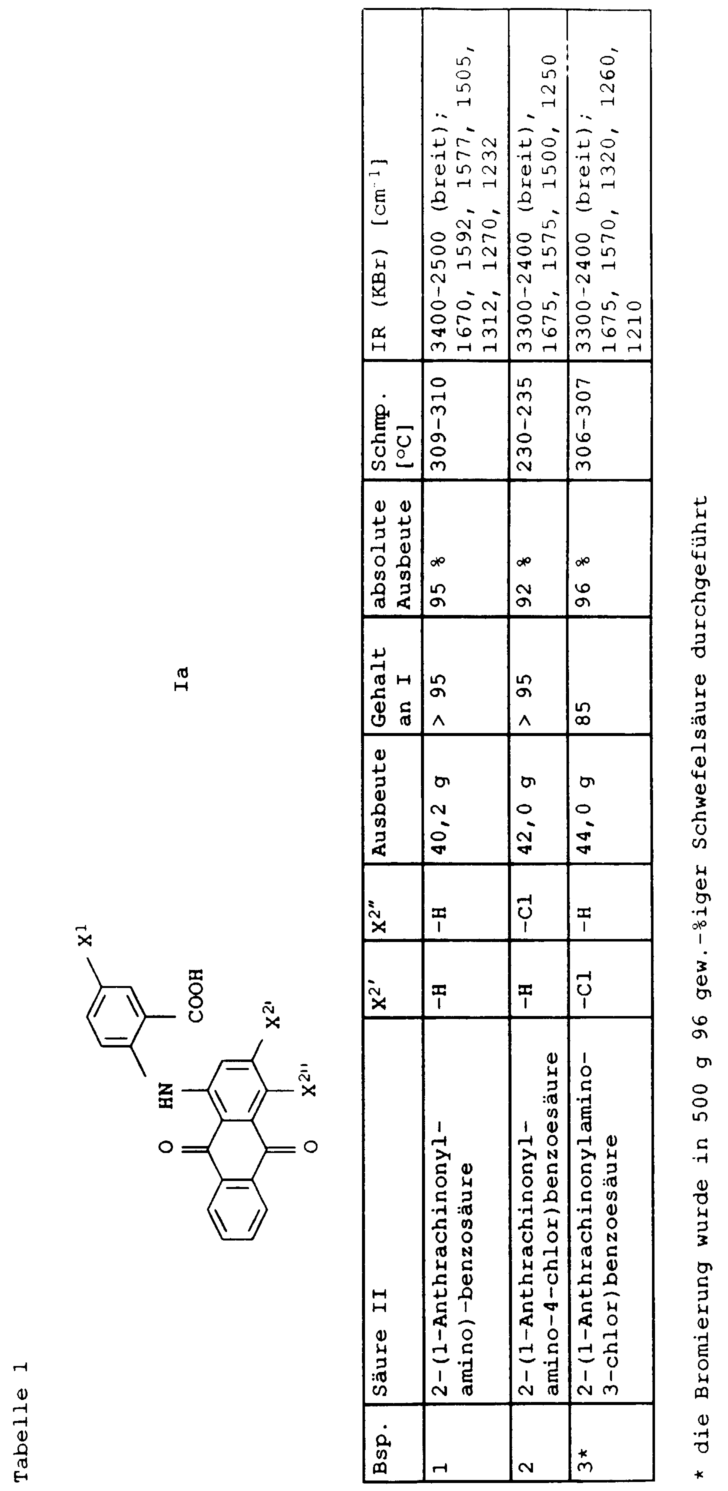
B) Herstellung von 4'-Brom-2,1(N)-anthrachinonyl-1',2'(N)-benzacridonen III

### Beispiel 4 bis 6

Zu einer Lösung von 0,5 mol der Säure II in 2,5 kg 100 gew.-%iger Schwefelsäure wurden bei 0 bis 5°C 91,9 g (0,57 mol) Brom in 90 min zugetropft. Die erhaltene Mischung wurde noch 3 h bei 0 bis 5°C gerührt.

Dann wurden überschüssiges Brom und Bromwasserstoff mit Druckluft ausgeblasen. Die Reaktionsmischung wurde anschließend nach 5 h bei 75°C gerührt und nach Abkühlen auf Raumtemperatur auf 3 kg Eis/Wasser-Gemisch gefällt.

Das ausgefällte Acridon III wurde abfiltriert, mit Wasser neutral gewaschen und getrocknet.

Einzelheiten zu diesen Versuchen sowie deren Ergebnisse sind in Tabelle 2 aufgeführt.

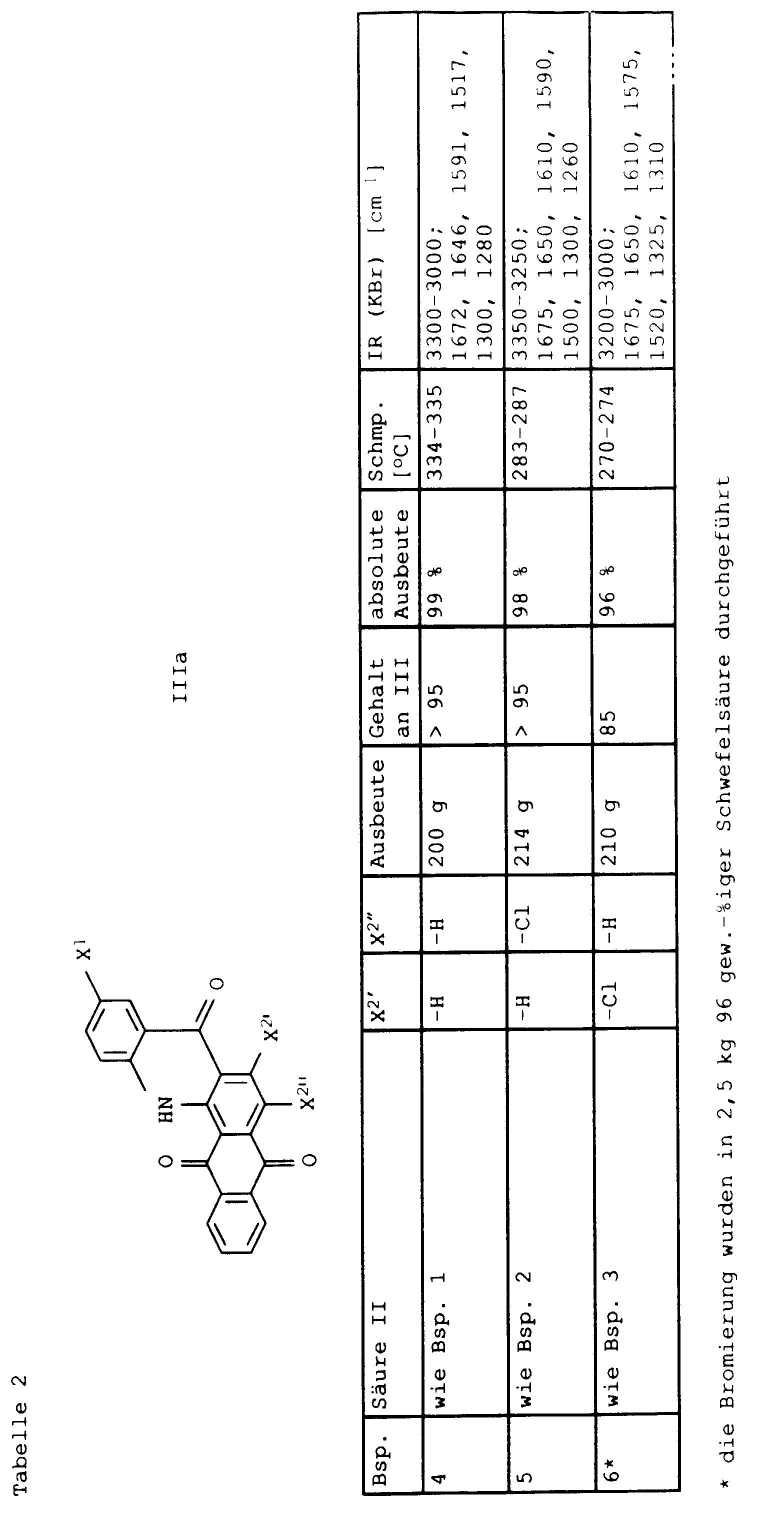

## Patentansprüche

1. Verfahren zur Herstellung von 5-Halogen-2-(1-anthrachinonylamino)benzoesäuren der allgemeinen Formel I 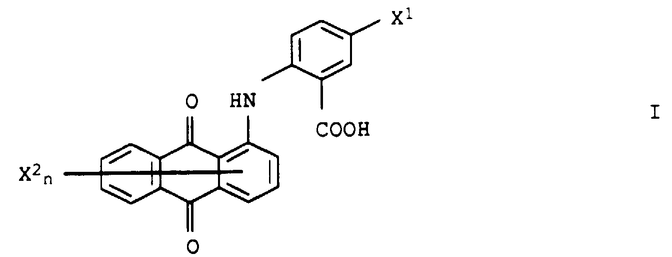 in der
X¹ Chlor oder Brom bedeutet,
X² für Wasserstoff, Chlor oder Brom steht, wobei diese Reste im Fall n > 1 gleich oder verschieden sein können, und
n eine Zahl von 1 bis 6 bedeutet,
dadurch gekennzeichnet, daß man 2-(1-Anthrachinonylamino)benzoesäuren der allgemeinen Formel II 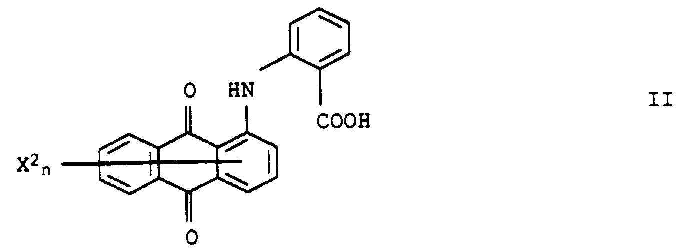 in Gegenwart von Schwefelsäure mit dem Halogen umsetzt.

2. Verfahren zur Herstellung von 4'-Halogen-2,1(N)-anthrachinonyl-1',2'(N)-benzacridonen der allgemeinen Formel III 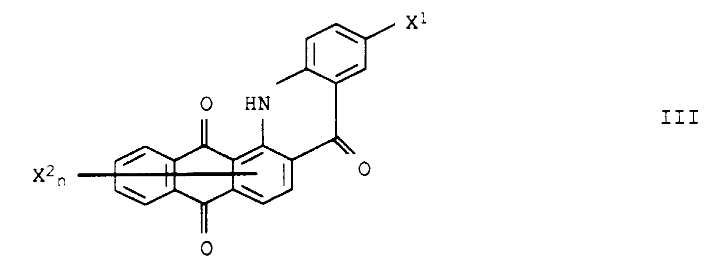 in der
X¹ Chlor oder Brom bedeutet,
X² für Wasserstoff, Chlor oder Brom steht, wobei diese Reste im Fall n > 1 gleich oder verschieden sein können, und
n eine Zahl von 1 bis 6 bedeutet,
dadurch gekennzeichnet, daß man zunächst 2-(1-Anthrachinonylamino)benzoesäuren der allgemeinen Formel II 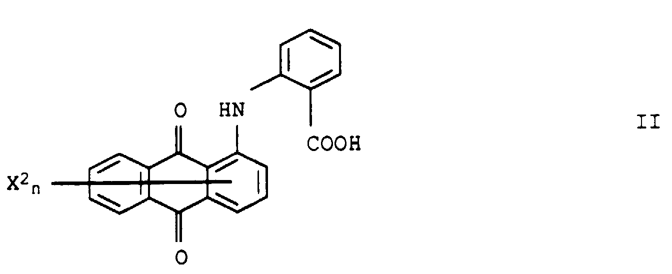 in Gegenwart von Schwefelsäure mit Halogen zu 5-Halogen-2(1-anthrachinonylamino)benzoesäuren der allgemeinen Formel I 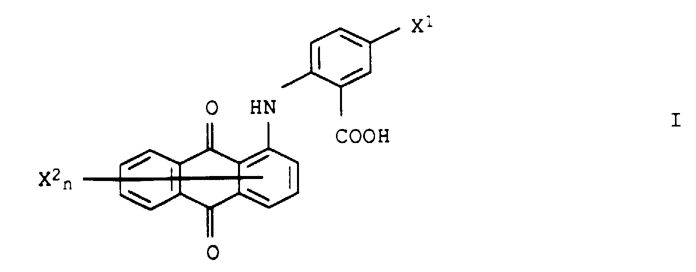 umsetzt und die Säuren I dann nach Entfernung von eventuell vorhandenem, überschüssigem Halogen und gebildetem Halogenwasserstoff sowie Temperaturerhöhung in Gegenwart der Schwefelsäure cyclisierend kondensiert.

3. Verfahren nach Anspruch 2, dadurch gekennzeichnet, daß man es zur Herstellung von 4'-Brom-2,1(N)-anthrachinonyl-1',2'(N)-benzacridon anwendet.

## Claims

1. A process for preparing 5-halo-2- (1-anthraquinonylamino)benzoic acids of the general formula I 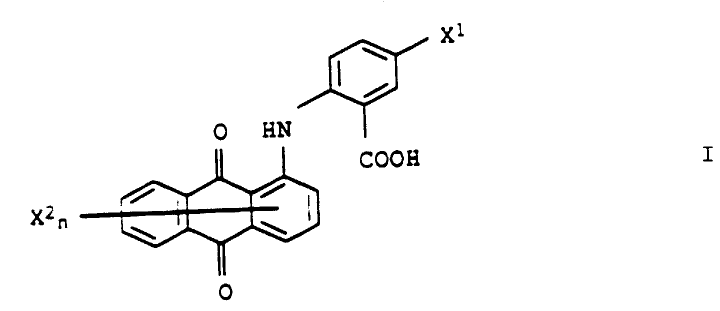 where
X¹ is chlorine or bromine,
X² is hydrogen, chlorine or bromine, the X² radicals for n > 1 being identical or different, and
n is from 1 to 6,
which comprises reacting 2-(1-anthraquinonylamino)benzoic acids of the general formula II 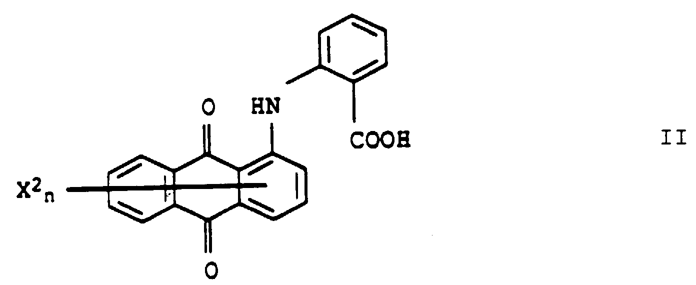 with the halogen in the presence of sulfuric acid.

2. A process for preparing 4'-halo-2,1(N)-anthraquinonyl-1',2'(N)-benzacridones of the general formula III 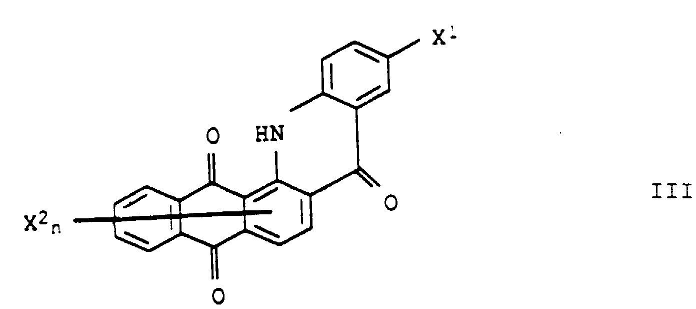 where
X¹ is chlorine or bromine,
X² is hydrogen, chlorine or bromine, the X² radicals for n > 1 being identical or different, and
n is from 1 to 6,
which comprises first reacting 2- (1-anthraquinonylamino)-benzoic acids of the general formula II 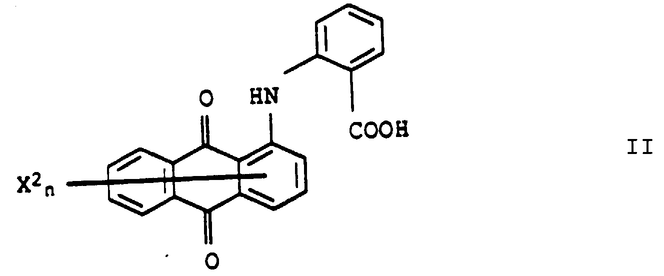 with halogen in the presence of sulfuric acid to form 5-halo-2-(1-anthraquinonylamino)benzoic acids of the general formula I 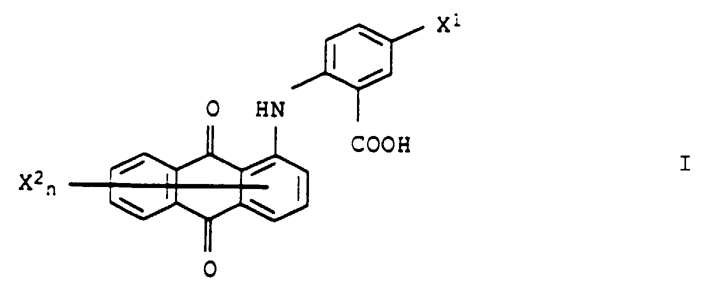 and then, after removal of any excess halogen and product hydrogen halide and after raising the temperature, subjecting the acids I to cyclizing condensation in the presence of sulfuric acid.

3. A process as claimed in claim 2, wherein 4'-bromo-2,1(N)-anthraquinonyl-1',2' (N)-benzacridone is prepared.

## Revendications

1. Procédé de préparation d'acides 5-halogéno-2-(1-anthraquinonylamino)benzoïques de formule générale I 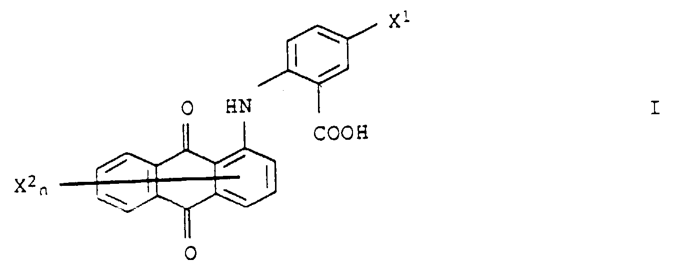 dans laquelle
X¹ est mis pour un atome de chlore ou de brome,
X² est mis pour un atome d'hydrogène, de chlore ou de brome, ces restes pouvant être identiques ou différents lorsque n > 1, et
n est mis pour un nombre de 1 à 6,
caractérisé en ce que l'on fait réagir des acides 2-(1-anthraquinonylamino)benzoïques de formule générale II 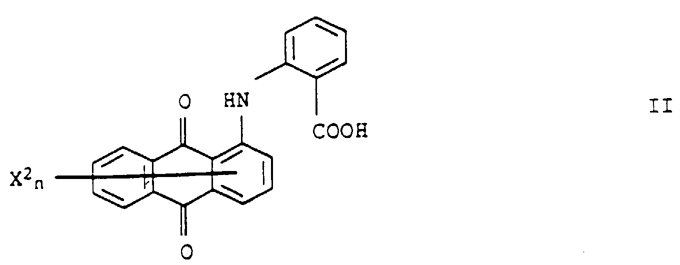 avec l'halogène en présence d'acide sulfurique.

2. Procédé de préparation de 4'-halogéno-2,1(N)-anthraquinonyl-1',2'(N)-benzacridones de formule générale III 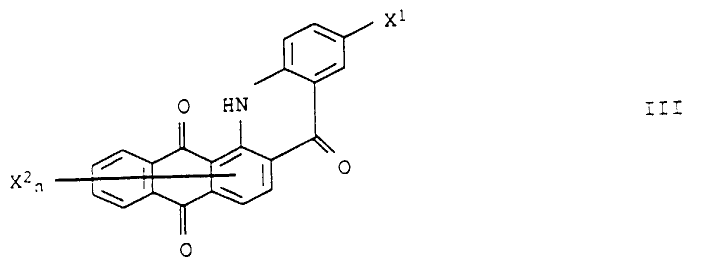 dans laquelle
X¹ est mis pour un atome de chlore ou de brome,
X² est mis pour un atome d'hydrogène, de chlore ou de brome, ces restes pouvant être identiques ou différents lorsque n > 1, et
n est mis pour un nombre de 1 à 6,
caractérisé en ce que l'on fait réagir tout d'abord des acides 2-(1-anthraquinonylamino)benzoïques de formule générale II 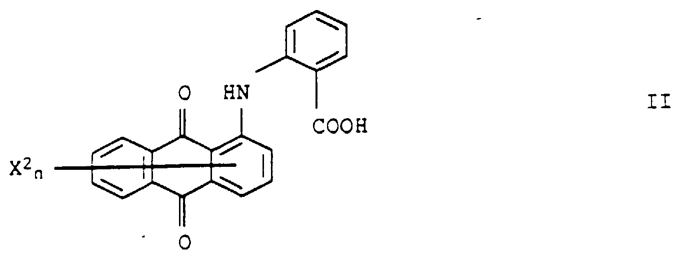 avec un halogène en présence d'acide sulfurique pour donner des acides 5-halogéno-2-(1-anthraquinonylamino)benzoïques de formule générale I 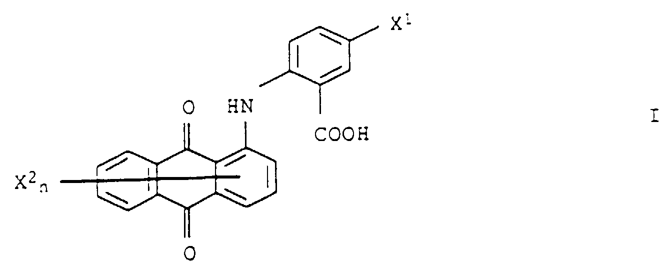 puis l'on condense les acides I par cyclisation en présence d'acide sulfurique ainsi que par élévation de la température, après élimination de l'halogène en excès et de l'hydracide halogéné formé éventuellement présents.

3. Procédé selon la revendication 2, caractérisé en ce qu'on l'utilise pour la préparation de 4'-bromo-2,1(N)-anthraquinonyl-1',2'(N)-benzacridone.
